# EUROPEAN PATENT APPLICATION

(11) **EP 3 197 159 A1**
(43) Date of publication of application: **26.07.2017**
(21) Application number: 16305066.9
(22) Date of filing: 25.01.2016
(51) Int. Cl.: H04N 19/11, H04N 19/196

(54) **METHODS FOR CODING AND FOR DECODING AN IMAGE BLOCK AND CORRESPONDING DEVICES**

(71) Applicant: Thomson Licensing, 92130 Issy-les-Moulineaux (FR)
(72) Inventor: TURKAN, Mehmet, 35576 Cesson-Sévigné Cedex (FR); ZEPEDA, Joaquin, 35576 Cesson-Sévigné Cedex (FR); LE PENDU, Mikael, 35576 Cesson-Sévigné Cedex (FR); THOREAU, Dominique, 35576 Cesson-Sévigné Cedex (FR)
(74) Representative: Huchet, Anne

(57) **Abstract**

A decoding method is disclosed. The decoding method comprises :
- decoding, for an image block, information representative of a current intra directional prediction mode;
- decoding, for the image block, additional information indicating whether the image block is predicted according to the current intra directional prediction mode or according to both the current intra directional prediction mode and an additional intra directional prediction mode whose direction is adjacent to a direction of the current intra directional prediction mode; and
- decoding the image block responsive to the information representative of the current intra directional prediction mode and to the additional information.

## Description

### 1. TECHNICAL FIELD

In the following, a method and a device for decoding an image block are disclosed. Corresponding encoding method and encoding device are further disclosed.

### 2. BACKGROUND ART

A new video coding standard H.265/HEVC gives significant gains over H.264/AVC through features such as improved intra-prediction, larger block sizes, more flexible ways of decomposing blocks for intra- and inter-coding. Knowing that approximately one third of an HEVC stream is occupied by intra-coded image, improving intra prediction is of interest. Intra prediction is performed using only the information that is contained within an image or a slice in a video sequence. An image block in an intra image or in an intra slice is intra predicted. A residual block is then obtained by subtracting a prediction block from the image block. The residual block is finally encoded in a stream.

Both the H.264/AVC and the H.265/HEVC intra prediction methods are based on intra directional prediction modes. They are suitable in the presence of contours when the directional mode selected corresponds to the orientation of the contour. However, they tend to fail when more complex structures and textured areas are present (e.g. curved structures, T- or Y-junctions).

### 3. BRIEF SUMMARY

A decoding method is disclosed that comprises :
- decoding, for an image block, information representative of a current intra directional prediction mode;
- decoding, for the image block, additional information indicating whether the image block is predicted according to the current intra directional prediction mode or according to both the current intra directional prediction mode and an additional intra directional prediction mode whose direction is adjacent to a direction of the current intra directional prediction mode; and
- decoding the image block responsive to the information representative of the current intra directional prediction mode and to the additional information.

Advantageously, the case where the additional information indicates that the image block is predicted according to both the current intra directional prediction mode and the additional intra directional prediction mode, the image block is predicted as a linear combination of a first prediction block obtained according to the current intra directional prediction mode and of a second prediction block obtained according to the additional intra directional prediction mode.

As an example, the image block is predicted by α*p1+β*p2, where p1 is the first prediction block, p2 is the second prediction block and α and β are constant values.

In a specific embodiment, further comprising decoding the constant value α.

As an example, the constant values α and β are equal to 0.5.

A coding method is also disclosed that comprises:
- encoding, for an image block, information representative of at least one intra directional prediction mode;
- encoding additional information indicating whether the image block is predicted according to the intra directional prediction mode or according to the intra directional prediction mode and further according to an adjacent intra directional prediction mode; and
- encoding the image block responsive to the information representative of an intra directional prediction mode and to the additional information.

Advantageously, in the case where additional information indicates that the image block is predicted according to the intra directional prediction mode and further according to an adjacent intra directional prediction mode, the image block is predicted as a linear combination of a first prediction block obtained according to the intra directional prediction mode and of a second prediction block obtained according to the adjacent intra directional prediction mode.

As an example, the image block is predicted by α*p1+β*p2, where p1 is the first prediction block, p2 is the second prediction block and α and β are constant values.

In a specific embodiment, decoding the constant value α.

As an example, the constant values α and β are equal to 0.5.

A decoding device is disclosed that comprises :
- means for decoding, for an image block, information representative of a current intra directional prediction mode;
- means for decoding, for the image block, additional information indicating whether the image block is predicted according to the current intra directional prediction mode or according to both the current intra directional prediction mode and an additional intra directional prediction mode whose direction is adjacent to a direction of the current intra directional prediction mode; and
- means for decoding the image block responsive to the information representative of the current intra directional prediction mode and to the additional information.

The present embodiments also provide a decoding device comprising a communication interface configured to access at least a stream and at least one processor configured to:
- decode, for an image block, information representative of a current intra directional prediction mode from the accessed stream;
- decode, for the image block, additional information from the accessed stream, wherein the additional information indicates whether the image block is predicted according to the current intra directional prediction mode or according to both the current intra directional prediction mode and an additional intra directional prediction mode whose direction is adjacent to a direction of the current intra directional prediction mode; and
- decode the image block responsive to the information representative of the current intra directional prediction mode and to the additional information.

A coding device is disclosed that comprises:
- means for encoding, for an image block, information representative of at least one intra directional prediction mode;
- means for encoding additional information indicating whether the image block is predicted according to the intra directional prediction mode or according to the intra directional prediction mode and further according to an adjacent intra directional prediction mode; and
- means for encoding the image block responsive to the information representative of an intra directional prediction mode and to the additional information.

The present embodiments also provide a coding device comprising a communication interface configured to access at least an image block and at least one processor configured to:
- encode, for the accessed image block, information representative of at least one intra directional prediction mode;
- encode additional information indicating whether the accessed image block is predicted according to the intra directional prediction mode or according to the intra directional prediction mode and further according to an adjacent intra directional prediction mode; and
- means for encoding the accessed image block responsive to the information representative of an intra directional prediction mode and to the additional information.

A non-transitory computer readable medium with instructions stored therein is disclosed. The instructions, upon execution, instruct at least one processor to:
- decode, for an image block, information representative of a current intra directional prediction mode;
- decode, for the image block, additional information indicating whether the image block is predicted according to the current intra directional prediction mode or according to both the current intra directional prediction mode and an additional intra directional prediction mode whose direction is adjacent to a direction of the current intra directional prediction mode; and
- decode the image block responsive to the information representative of the current intra directional prediction mode and to the additional information.

A non-transitory computer readable medium with instructions stored therein is disclosed. The instructions, upon execution, instruct at least one processor to:
- encode, for an image block, information representative of at least one intra directional prediction mode;
- encode additional information indicating whether the image block is predicted according to the intra directional prediction mode or according to the intra directional prediction mode and further according to an adjacent intra directional prediction mode; and
- encode the image block responsive to the information representative of an intra directional prediction mode and to the additional information.

A stream is also disclosed that comprises information representative of an intra directional prediction mode, additional information indicating whether an image block is predicted according to the intra directional prediction mode or according to both the intra directional prediction mode and an additional intra directional prediction mode whose direction is adjacent to a direction of the current intra directional prediction mode and information representative of the image block coded responsive to the information representative of an intra directional prediction mode and to the additional information.

### 4. BRIEF SUMMARY OF THE DRAWINGS

- Figure 1 represents an exemplary architecture of a receiver configured to decode an image block from a stream to obtain a decoded image block according to a non-limiting embodiment;
- Figure 2 represents a flowchart of a method for decoding an image block from a stream according to a specific and non-limiting embodiment;
- Figure 3 represents the 8 spatial directions for which an H.264 intra directional prediction mode is defined;
- Figure 4 represents the 33 spatial directions for which an H.265 intra directional prediction mode is defined;
- Figure 5 represents an image block to be predicted and neighboring sample values from which it is predicted;
- Figure 6 represents a flowchart of a method for decoding an image block from a stream according to another specific and non-limiting embodiment;
- Figure 7 represents an exemplary architecture of a transmitter configured to encode an image block in a stream according to a non-limiting embodiment;
- Figure 8 represents a flowchart of a method for encoding an image block in a stream according to a specific and non-limiting embodiment; and
- Figure 9 represents a flowchart of a method encoding an image block in a stream according to another specific and non-limiting embodiment.

### 5. DETAILED DESCRIPTION

It is to be understood that the figures and descriptions have been simplified to illustrate elements that are relevant for a clear understanding of the present principles, while eliminating, for purposes of clarity, many other elements found in typical encoding and/or decoding devices. It will be understood that, although the terms first and second may be used herein to describe various elements, these elements should not be limited by these terms. These terms are only used to distinguish one element from another. In the following sections, an image block is composed of samples associated with sample values, e.g. luma samples or chroma samples, etc.

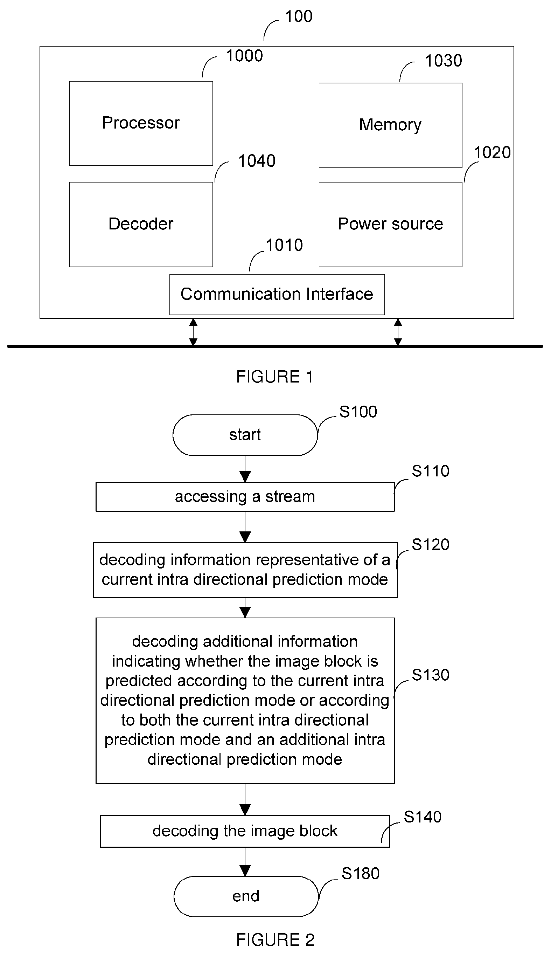

**Figure 1** represents an exemplary architecture of a receiver 100 configured to decode an image block from a stream to obtain a decoded image block according to a non-limiting embodiment.

The receiver 100 comprises one or more processor(s) 1000, which could comprise, for example, a CPU, a GPU and/or a DSP (English acronym of Digital Signal Processor), along with internal memory 1030 (e.g. RAM, ROM and/or EPROM). The receiver 100 comprises one or more communication interface(s) 1010 (e.g. a keyboard, a mouse, a touchpad, a webcam), each adapted to display output information and/or allow a user to enter commands and/or data (e.g. the decoded image block); and a power source 1020 which may be external to the receiver 100. The receiver 100 may also comprise one or more network interface(s) (not shown). The decoder module 1040 represents the module that may be included in a device to perform the decoding functions. Additionally, the decoder module 1040 may be implemented as a separate element of the receiver 100 or may be incorporated within processor(s) 1000 as a combination of hardware and software as known to those skilled in the art.

The stream may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- a picture capturing circuit (e.g. a sensor such as, for example, a CCD (or Charge-Coupled Device) or CMOS (or Complementary Metal-Oxide-Semiconductor)).

According to different embodiments, the decoded image block may be sent to a destination, e.g. a display device. As an example, the decoded image block is stored in a remote or in a local memory, e.g. a video memory or a RAM, a hard disk. In a variant, the decoded image block is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

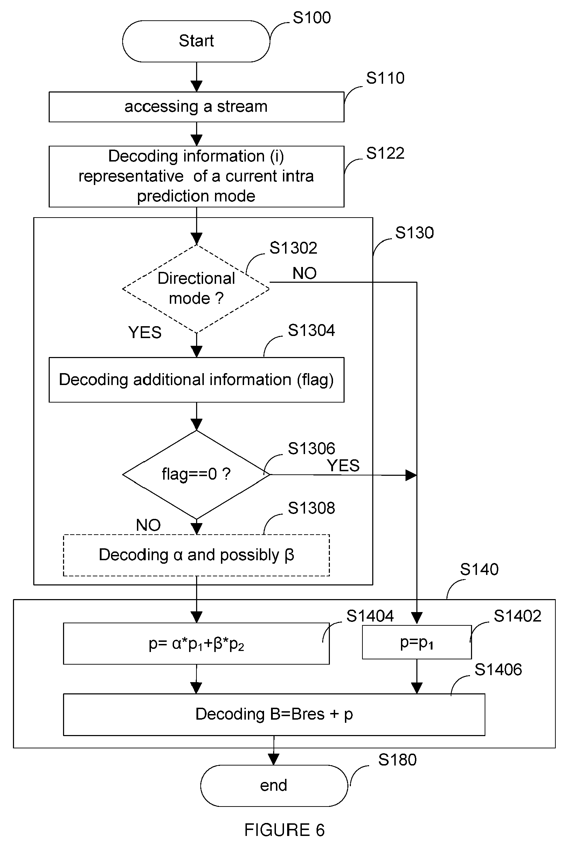

According to a specific and non-limiting embodiment, the receiver 100 further comprises a computer program stored in the memory 1030. The computer program comprises instructions which, when executed by the receiver 100, in particular by the processor 1000, enable the receiver to execute the decoding method described with reference to figure 2 or to figure 6. According to a variant, the computer program is stored externally to the receiver 100 on a non-transitory digital data support, e.g. on an external storage medium such as a HDD, CD-ROM, DVD, a read-only and/or DVD drive and/or a DVD Read/Write drive, all known in the art. The receiver 100 thus comprises a mechanism to read the computer program. Further, the receiver 100 could access one or more Universal Serial Bus (USB)-type storage devices (e.g., "memory sticks.") through corresponding USB ports (not shown).

According to exemplary and non-limiting embodiments, the receiver 100 can be, but is not limited to:
- a mobile device ;
- a communication device ;
- a game device ;
- a set top box;
- a TV set;
- a tablet (or tablet computer) ;
- a laptop ;
- a video player, e.g. a Blu-ray player, a DVD player;
- a display and
- a decoding chip or decoding device.

**Figure 2** represents a flowchart of a method for decoding an image block from a stream according to a specific and non-limiting embodiment.

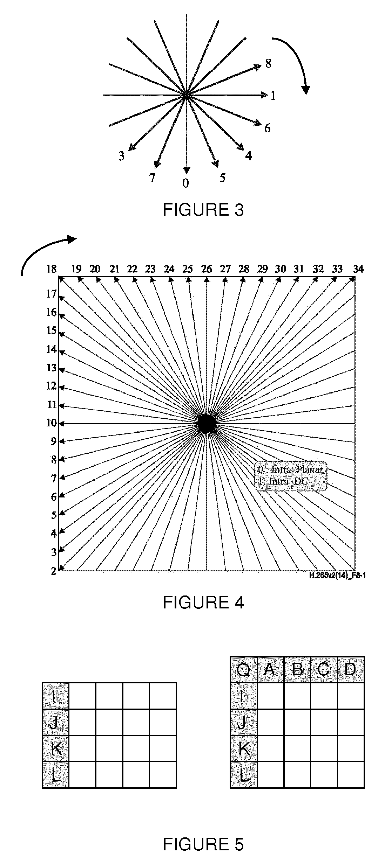

The method starts at step S100. At step S110, a receiver accesses a stream. At step S120, the receiver decodes information representative of a current intra directional prediction mode from the accessed stream. This information is representative of a spatial direction of an intra directional prediction mode. In the case where an intra directional prediction mode is associated with a single spatial direction, indicating the mode or the spatial direction is equivalent. As an example, the H.264 video coding standard defines 8 intra directional prediction modes (vertical, horizontal, diagonal down-left, diagonal down-right, vertical right, vertical left, horizontal down and horizontal up) for 4x4 blocks and 8x8 blocks. On **figure 3****,** the 8 spatial directions for which an H.264 intra directional prediction mode is defined are represented (labelled from index 0 to index 8, index 2 being reserved for DC mode is not considered). On figure 3, the indexes are the ones defined in section 8.3.1.1 of the document ITU-T H.264 entitled *"Advanced Video Coding for Generic Audiovisual Services".* It will be appreciated, however, that the present principles are not restricted to the H.264 video coding standard for the definition of the intra directional prediction modes. In particular, the method may also apply to HEVC video coding standard. The HEVC video standard defines 33 intra directional prediction modes for blocks whose size varies from 4x4 to 32x32. Each intra directional prediction mode is associated with a spatial direction. On **figure 4****,** the 33 spatial directions for which an HEVC intra directional prediction mode is defined are represented (labelled from 2 to 34, the indices 0 and 1 are reserved for specific planar and DC modes which are not directional modes). On figure 4, the indexes are the ones defined in section 8.4.2 of the document ITU-T H.265 entitled *"Advanced Video Coding for Generic Audiovisual Services".* The information representative of a current intra directional prediction mode may be an index. In H.264, the information representative of a current intra directional prediction mode is given by the syntax element Intra4x4PredMode[] for a 4x4 block and by the syntax element Intra8x8PredMode[] for an 8x8 block. In HEVC, the information representative of a current intra directional prediction mode is given by the syntax element IntraPredModeY[][].

At step S130, the receiver decodes additional information indicating whether the image block is predicted according to the current intra directional prediction mode only or according to both the current intra directional prediction mode and an additional intra directional prediction mode whose spatial direction is adjacent to the spatial direction of the current intra directional prediction mode. The additional information may be a flag, i.e. a binary index. As an example, in the case where the flag is equal to 0, then the image block is predicted only according to the current intra directional prediction mode, otherwise (flag=1), then the image block is predicted according to both the current intra directional prediction mode and an additional intra directional prediction mode whose direction is adjacent to the direction of the current intra directional prediction mode. The definition of the values 0 and 1 of the flag may be inverted.

At step S140, the receiver decodes the image block responsive to the information representative of the current intra directional prediction mode and to the additional information. To this aim, a prediction block is obtained based on the additional information decoded at step S130.

In the case where the image block is predicted according to the current intra directional prediction mode only, then a prediction block, namely a final prediction block, is determined according to the current intra directional prediction mode. As an example, if the information representative of a current intra directional prediction mode decoded at step S120 indicates that the current intra directional prediction mode is an Horizontal mode (index 1 on figure 3) as defined in H.264 for a 4x4 block, the prediction block is determined by equation (8-47) of section 8.3.1.2.2 of the document ITU-T H.264 entitled *"Advanced Video Coding for Generic Audiovisual Services"* and as depicted on figure 5 from the neighboring sample values I, J, K and L.

In the case where the image block is predicted according to both the current intra directional prediction mode and the additional intra directional prediction mode whose direction is adjacent to the direction of the current intra directional prediction mode, then a prediction block is determined according to these two modes. As an example, if the information representative of a current intra directional prediction mode decoded at step S120 indicates that the current intra directional prediction mode is an Horizontal mode (index 1 on figure 3) as defined in H.264 for a 4x4 block, a first prediction block p1 is determined as indicated by equation (8-47) of the section 8.3.1.2.2 of the document ITU-T H.264 *"Advanced Video Coding for Generic Audiovisual Services"* and as depicted on **figure 5** from the neighboring sample values I, J, K and L. A second prediction block p2 is then determined from the additional intra directional prediction mode whose direction is adjacent to the direction of the current intra directional prediction mode. On figure 3, the modes 6 and 8 are adjacent to the Horizontal mode. By definition, the additional intra directional prediction mode may be the adjacent mode in a clockwise direction, i.e. the mode 6. In a variant, the additional intra directional prediction mode may be the adjacent mode in an anti-clockwise direction, i.e. the mode 8. If the additional intra directional prediction mode is the mode 6 (horizontal down mode), then the second prediction block p2 determined as indicated in equation (8-61) to (8-64) of the section 8.3.1.2.7 of the document ITU-T H.264 *"Advanced Video Coding for Generic Audiovisual Services"* and as depicted on figure 5 from the neighboring sample values I, J, K, L, Q, A, B, C and D. A final prediction block p is determined as a linear combination of p1 and p2. p= α*p1 +β*p2 where α and β are constant values, e.g. α = β=0.5. In a specific embodiment, β=(1-α).

Decoding the image block may further comprise decoding a residual block from the accessed stream and further adding the residual block to the final prediction block. The image block resulting from the addition is the decoded image block. Decoding a residual block from the accessed stream may comprise entropy decoding a part of the accessed stream representative of the residual block into coefficients, inverse quantizing the coefficients, transforming the inverse quantized coefficients into a residual block.
The method ends at step S180.

**Figure 6** represents a flowchart of a method for decoding an image block from a stream according to a specific and non-limiting embodiment. The steps of figure 6 identical to the steps of figure 2 are numbered with the same numerical values and are not further disclosed.
The method starts at step S100. At step S110, a receiver accesses a stream. At step S122, the receiver decodes information i representative of a current intra prediction mode from the accessed stream. At step S1302, the receiver checks whether the current intra prediction mode is directional or not (e.g. mode 2 in the case of H.264 or modes 0 and 1 in the case of HEVC). The step S1302 is optional and does not take place when all intra prediction modes are intra directional prediction modes. Thus, in the case where the current intra prediction mode is not directional (i.e. i is equal to 0 or 1 for HEVC), the method continues at step S1402. In the case where the current intra prediction mode is a directional mode, then the method continues to step S1304. At step S1304, the receiver decodes additional information (flag) indicating whether the image block is predicted according to the current intra directional prediction mode only or according to both the current intra directional prediction mode and an additional intra directional prediction mode whose direction is adjacent to the direction of the current intra directional prediction mode. At step S1306, the receiver compares the flag with a default value (e.g. 0). If flag is equal to 0, the method continues to step S1402, otherwise the method continues to step S1404. In an optional step S1308, the value α and possibly the value β are decoded from the accessed stream. The value ∝ may belong to a known set of values and may be signaled by side information (e.g. an index). As an example, the set of ∝ values may be {0.20, 0.40, 0.60, 0.80}. In this case, the current ∝ value may be signaled by 2-bit side information. The same embodiment may apply to signal the value of β.

At step S1402, a prediction block, namely a final prediction block p, is determined according to the current intra prediction mode indicated by i. As an example, if the information i representative of a current intra prediction mode decoded at step S122 indicates that the current intra prediction mode is an Horizontal mode as defined in H.264 for a 4x4 block, the prediction block is determined as indicated in section 8.3.1.2.2 of the document ITU-T H.264 entitled *"Advanced Video Coding for Generic Audiovisual Services"* and as depicted on figure 5 from the neighboring sample values I, J, K and L. If the information i representative of a current intra prediction mode decoded at step S122 indicates that the current intra prediction mode is a DC mode as defined in H.264 for a 4x4 block, the prediction block is determined as indicated in section 8.3.1.2.3 of the document ITU-T H.264 entitled *"Advanced Video Coding for Generic Audiovisual Services".*

At step S1404, a prediction block is determined according to both the current intra directional prediction mode indicated by i and the additional intra directional prediction mode whose direction is adjacent to the direction of the current intra directional prediction mode. As an example, if the information i representative of a current intra directional prediction mode decoded at step S122 indicates that the current intra directional prediction mode is an Horizontal mode (index 1 on figure 3) as defined in H.264 for a 4x4 block, a first prediction block p1, namely pᵢ, is determined as indicated in equation (8-47) of the section 8.3.1.2.2 of the document ITU-T H.264 *"Advanced Video Coding for Generic Audiovisual Services"* and as depicted on figure 5 from the neighboring sample values I, J, K and L. A second prediction block p2, namely pᵢ₊₁ or pᵢ₋₁, is then determined from the additional intra directional prediction mode whose direction is adjacent to the direction of the current intra directional prediction mode. On figure 3, the modes 6 and 8 are adjacent to the Horizontal mode. By definition, the additional intra directional prediction mode may be the adjacent mode in a clockwise direction, i.e. the mode 6. In a variant, the additional intra directional prediction mode may be the adjacent mode in an anti-clockwise direction, i.e. the mode 8.

If the additional intra directional prediction mode is the mode 6 (horizontal down mode), then the second prediction block p2 is determined as indicated in equation (8-61) to (8-64) of the section 8.3.1.2.7 of the document ITU-T H.264 *"Advanced Video Coding for Generic Audiovisual Services"* and as depicted on figure 5 from the neighboring sample values I, J, K, L, Q, A, B, C and D. A final prediction block p is determined as a linear combination of p1 and p2. p= α*p1+β*p2 where α and β a constant values, e.g. α = β=0.5. In a specific embodiment, β=(1-α).

At step S1406, the final prediction block p is possibly added to a decoded residual block Bres to obtain the decoded image block B. Decoding a residual block from the accessed stream may comprise entropy decoding a part of the accessed stream representative of the residual block into coefficients, inverse quantizing the coefficients, transforming the inverse quantized coefficients into a residual block.
The method ends at step S180.

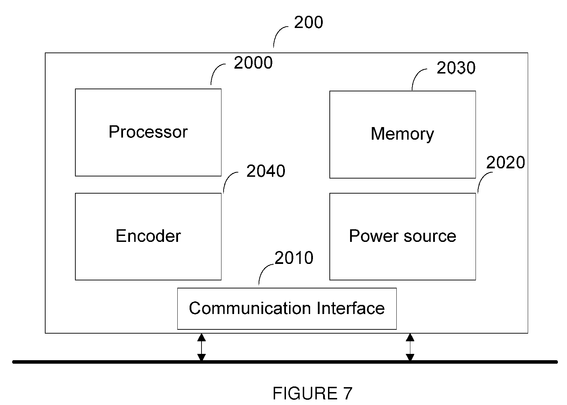

**Figure 7** represents an exemplary architecture of a transmitter 100 configured to encode an image block in a stream according to a non-limiting embodiment.

The transmitter 200 comprises one or more processor(s) 2000, which could comprise, for example, a CPU, a GPU and/or a DSP (English acronym of Digital Signal Processor), along with internal memory 2030 (e.g. RAM, ROM, and/or EPROM). The transmitter 200 comprises one or more communication interface(s) 2010 (e.g. a keyboard, a mouse, a touchpad, a webcam), each adapted to display output information and/or allow a user to enter commands and/or data (e.g. a stream); and a power source 2020 which may be external to the transmitter 200. The transmitter 200 may also comprise one or more network interface(s) (not shown). Encoder module 2040 represents the module that may be included in a device to perform the coding functions. Additionally, encoder module 2040 may be implemented as a separate element of the transmitter 200 or may be incorporated within processor(s) 2000 as a combination of hardware and software as known to those skilled in the art. The image block may be obtained from a source. According to different embodiments, the source can be, but is not limited to:
- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to different embodiments, the stream may be sent to a destination. As an example, the stream is stored in a remote or in a local memory, e.g. a video memory or a RAM, a hard disk. In a variant, the stream is sent to a storage interface, e.g. an interface with a mass storage, a ROM, a flash memory, an optical disc or a magnetic support and/or transmitted over a communication interface, e.g. an interface to a point to point link, a communication bus, a point to multipoint link or a broadcast network.

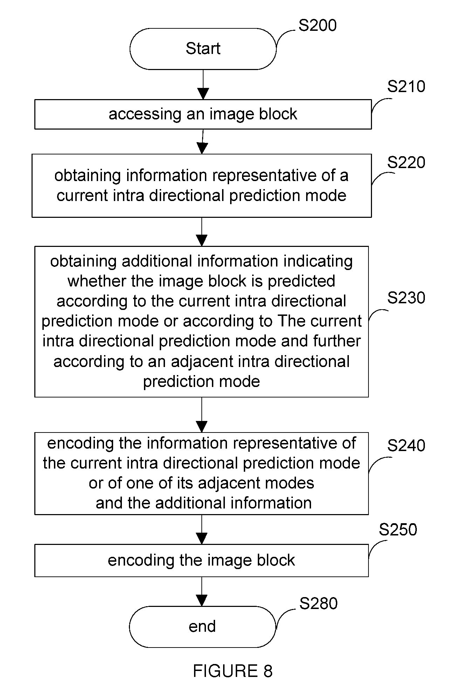

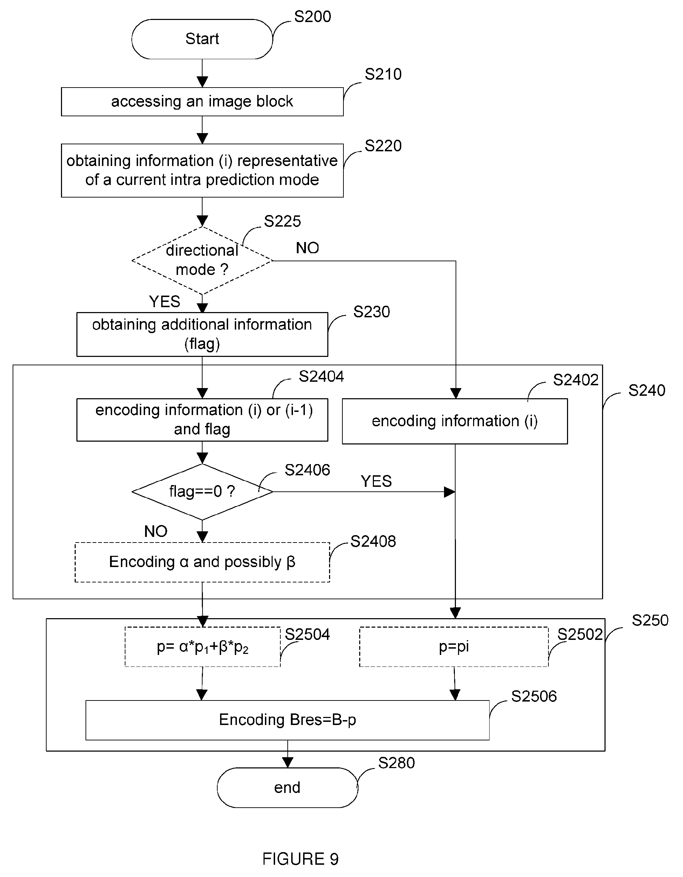

According to an exemplary and non-limiting embodiment, the transmitter 200 further comprises a computer program stored in the memory 2030. The computer program comprises instructions which, when executed by the transmitter 200, in particular by the processor 2000, enable the transmitter 200 to execute the encoding method described with reference to figure 8 or 9. According to a variant, the computer program is stored externally to the transmitter 200 on a non-transitory digital data support, e.g. on an external storage medium such as a HDD, CD-ROM, DVD, a read-only and/or DVD drive and/or a DVD Read/Write drive, all known in the art. The transmitter 200 thus comprises a mechanism to read the computer program. Further, the transmitter 200 could access one or more Universal Serial Bus (USB)-type storage devices (e.g., "memory sticks.") through corresponding USB ports (not shown).

According to exemplary and non-limiting embodiments, the transmitter 200 can be, but is not limited to:
- a mobile device ;
- a communication device ;
- a game device ;
- a tablet (or tablet computer) ;
- a laptop ;
- a still image camera;
- a video camera ;
- an encoding chip or encoding device;
- a still image server; and
- a video server (e.g. a broadcast server, a video-on-demand server or a web server).

**Figure 8** represents a flowchart of a method for encoding an image block in a stream according to a specific and non-limiting embodiment.

The method starts at step S200. At step S210, a transmitter accesses an image block. At step S220, the transmitter obtains information representative of a current intra directional prediction mode for the accessed image block. This information is representative of a spatial direction of an intra directional prediction mode. In the case where an intra directional prediction mode is associated with a single spatial direction, indicating the mode or the spatial direction is equivalent. The current intra directional prediction mode may be obtained from a memory or according to a RDO state-of-the art method (RDO stands for "Rate Distortion Optimization"). It will be appreciated, however, that the present principles are not restricted to the RDO method for obtaining a current intra directional prediction mode for the image block to be encoded. The same embodiments disclosed with respect to figure 2 for the decoding method also apply to the encoding method namely the intra directional prediction mode defined by H.264 and by HEVC and represented on figures 3 and 4 respectively. As an example in H.264, the syntax element Intra4x4PredMode[] is encoded for a 4x4 block and the syntax element Intra8x8PredMode[] for an 8x8 block. In HEVC, the syntax element IntraPredModeY[][] is encoded at step S220.

At step S230, the transmitter obtains additional information indicating whether the image block is predicted according to the current intra directional prediction mode only or according to both the current intra directional prediction mode and an additional intra directional prediction mode whose spatial direction is adjacent to the spatial direction of the current intra directional prediction mode. The additional information may be a flag, i.e. a binary index. As an example, a zero value (flag=0) is encoded to indicate that the image block is predicted according to the current intra directional prediction mode only, otherwise a value one is encoded (flag=1) to indicate that the image block is predicted according to both the current intra directional prediction mode and an additional intra directional prediction mode whose direction is adjacent to the direction of the current intra directional prediction mode. The definition of the values 0 and 1 of the flag may be inverted. The additional information may be obtained from a memory or according to a RDO state-of-the art method (RDO stands for "Rate Distortion Optimization"). It will be appreciated, however, that the present principles are not restricted to the RDO method. Any method adapted to select between several prediction blocks to encode an image block is suitable.

At step S240, the transmitter encodes the information representative of the current intra directional prediction mode obtained at step S220 or of one of its adjacent modes and the additional information obtained at step S230 in the stream.

At step S250, the transmitter encodes the image block responsive to the information representative of the current intra directional prediction mode and to the additional information. To this aim, a prediction block is obtained based on the additional information encoded at step S240. The same embodiments and variants disclosed with respect to figure 2 for determining the prediction blocks apply.

Encoding the image block may comprise subtracting the final prediction block from the accessed image block to obtain a residual block. The residual block is then transformed into coefficients which are quantized and further entropy coded to form a part of the stream.

The method ends at step S280.

**Figure 9** represents a flowchart of a method encoding an image block in a stream according to a specific and non-limiting embodiment.

The steps of figure 9 identical to the steps of figure 8 are numbered with the same numerical values and are not further disclosed.

The method starts at step S200. At step S210, a transmitter accesses an image block. At step S220, the transmitter obtains information i representative of a current intra prediction mode for the accessed image block. Intra prediction modes comprises directional intra prediction modes and non-intra directional prediction modes (e.g. planar and DC modes).

At step S225, the transmitter checks whether the current intra prediction mode is directional or not (e.g. mode 2 in the case of H.264 or modes 0 and 1 in the case of HEVC). The step S225 is optional and does not take place when all intra prediction modes are intra directional prediction modes. Thus, in the case where the current intra prediction mode is not directional, the method continues at step S2402. In the case where the current intra prediction mode is directional, then the method continues to step S230. At step S230, the transmitter obtains additional information (flag) indicating whether the image block is predicted according to the current intra directional prediction mode only or according to both the current intra directional prediction mode and an additional intra directional prediction mode whose direction is adjacent to the direction of the current intra directional prediction mode. The additional information (flag) may be obtained from a memory. In a specific and non-limiting embodiment, the additional information (flag) is obtained by determining several prediction blocks and selecting one of them. A first prediction block p1 is determined from the mode i. A second prediction block p2 is determined from the modes i and (i+1) and a third p3 prediction block is determined from the modes i and (i-1): p1=pᵢ, p2= α*pᵢ+β*pᵢ₊₁ and p3= α*pᵢ₋₁+β*pᵢ, where pᵢ is the prediction block obtained from mode i, pᵢ₊₁ is the prediction block obtained from mode (i+1) and pᵢ₋₁ is the prediction block obtained from mode (i-1). An RDO state-of-the art method may be used to select between the three prediction blocks. However, the present principles are not restricted to the RDO method for the selection of a current intra directional prediction mode for the image block to be encoded. In the case where p1 is selected, then flag=0, in the case where p2 or p3 is selected then flag=1. In the cases where the mode i is one of the extreme modes (e.g. mode 2 or 34 for HEVC) the selection is made between p1 and p3 or p1 and p2 since pᵢ₋₁ or pᵢ₊₁ may be undefined. In a variant for HEVC, i being one of the extreme modes, the adjacent modes may be:
- if i=2 then pᵢ₊₁=3 and pᵢ₋₁= 33
- if i=34 then pᵢ₊₁ = 3 and pᵢ₋₁ = 33

At step S2402, the transmitter encodes the current intra direction prediction mode (i).

At step S2404, the transmitter encodes the additional information flag and also information representative of the current intra direction prediction mode (i) or of one of its adjacent modes (i+1) or (i-1). In the example above, in the case where p1 or p2 are selected, then information representative of the current intra directional prediction mode is encoded with the flag=0 for p1 and the flag=1 for p2. In the case where p3 is selected then information representative of the intra directional prediction mode (i-1) is encoded with the flag equal to 1.

At step S2406, the transmitter compares the flag with a default value (e.g. 0). If flag is equal to 0, the method continues to step S2502, otherwise the method continues to step S2504. In an optional step S2408, the value α and possibly the value β are encoded in the stream. The same embodiment as for the decoding method apply.

At step S2502, a prediction block p is determined according to the current intra directional prediction mode indicated by i. The prediction block may be obtained from a previous step (e.g. S230 or S220) if already determined or may be determined as in step S1402 of the decoding method.

At step S2504, a prediction block p is determined according to both the current intra directional prediction mode indicated by i and an additional intra directional prediction mode whose direction is adjacent to the direction of the current intra directional prediction mode. The prediction block may be obtained from a previous step (e.g. S230) if already determined or may be determined as in step S1404 of the decoding method.

At step S2506, the transmitter encodes the image block. Encoding the image block may comprise subtracting the prediction block p from the accessed image block to obtain a residual block. The residual block is then transformed into coefficients which are quantized and further entropy coded to form a part of a stream.

The method ends at step S280.

The encoding method produces a stream that comprises information representative of an intra directional prediction mode, additional information (flag) indicating whether the image block is predicted according to the intra directional prediction mode or according to both the intra directional prediction mode and an additional intra directional prediction mode whose direction is adjacent to a direction of the current intra directional prediction mode and further information representative of the image block coded responsive to said information representative of an intra directional prediction mode and to said additional information. The stream may be stored (e.g. on a processor-readable medium) or transmitted.

These encoding and decoding methods may apply to the luma component of an image block and may be extended to the chroma components in YUV, or in other formats, e.g. RGB.

In a variant, the combination of two adjacent directional prediction modes may be used for image blocks whose size is above a threshold in order to avoid encoding an additional flag for very small image blocks. This threshold may be defined at an encoder side and sent to the decoder.

Using a combination of two adjacent directional prediction modes for prediction makes it possible to adapt the prediction to possible slight curvature structured regions in the image and thus decrease the coding cost of such regions.

On Figures 2, 3, 8 and 9, the modules are functional units, which may or not be in relation with distinguishable physical units. For example, these modules or some of them may be brought together in a unique component or circuit, or contribute to functionalities of a software. *A contrario*, some modules may potentially be composed of separate physical entities. The apparatus which are compatible with the disclosure are implemented using either pure hardware, for example using dedicated hardware such ASIC or FPGA or VLSI, respectively « Application Specific Integrated Circuit », « Field-Programmable Gate Array », « Very Large Scale Integration », or from several integrated electronic components embedded in a device or from a blend of hardware and software components.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A decoding method comprising :
- decoding, for an image block, information representative of a current intra directional prediction mode;
- decoding, for said image block, additional information indicating whether said image block is predicted according to said current intra directional prediction mode or according to both said current intra directional prediction mode and an additional intra directional prediction mode whose direction is adjacent to a direction of said current intra directional prediction mode; and
- decoding said image block responsive to said information representative of said current intra directional prediction mode and to said additional information.

2. The decoding method according to claim 1, wherein in the case where said additional information indicates that said image block is predicted according to both said current intra directional prediction mode and said additional intra directional prediction mode, said image block is predicted as a linear combination of a first prediction block obtained according to said current intra directional prediction mode and of a second prediction block obtained according to said additional intra directional prediction mode.

3. The decoding method according to claim 2, wherein said image block is predicted by α*p1+β*p2, where p1 is said first prediction block, p2 is said second prediction block and α and β are constant values.

4. The decoding method according to claim 3, further comprising decoding said constant value α.

5. The decoding method according to claim 3 or 4, wherein said constant values α and β are equal to 0.5.

6. A coding method comprising:
- encoding, for an image block, information representative of at least one intra directional prediction mode;
- encoding additional information indicating whether said image block is predicted according to said intra directional prediction mode or according to said intra directional prediction mode and further according to an adjacent intra directional prediction mode; and
- encoding said image block responsive to said information representative of an intra directional prediction mode and to said additional information.

7. The encoding method according to claim 6, wherein in the case where additional information indicates that said image block is predicted according to said intra directional prediction mode and further according to an adjacent intra directional prediction mode, said image block is predicted as a linear combination of a first prediction block obtained according to said intra directional prediction mode and of a second prediction block obtained according to said adjacent intra directional prediction mode.

8. The encoding method according to claim 7, wherein said image block is predicted by α*p1+β*p2, where p1 is said first prediction block, p2 is said second prediction block and α and β are constant values.

9. The encoding method according to claim 8, further comprising encoding said constant value α.

10. The encoding method according to claim 8 or 9, wherein said constant values α and β are equal to 0.5.

11. A decoding device comprising :
- means for decoding, for an image block, information representative of a current intra directional prediction mode;
- means for decoding, for said image block, additional information indicating whether said image block is predicted according to said current intra directional prediction mode or according to both said current intra directional prediction mode and an additional intra directional prediction mode whose direction is adjacent to a direction of said current intra directional prediction mode; and
- means for decoding said image block responsive to said information representative of said current intra directional prediction mode and to said additional information.

12. A coding device comprising:
- means for encoding, for an image block, information representative of at least one intra directional prediction mode;
- means for encoding additional information indicating whether said image block is predicted according to said intra directional prediction mode or according to said intra directional prediction mode and further according to an adjacent intra directional prediction mode; and
- means for encoding said image block responsive to said information representative of an intra directional prediction mode and to said additional information.

13. A non-transitory computer readable medium with instructions stored therein which, upon execution, instruct at least one processor to:
- decode, for an image block, information representative of a current intra directional prediction mode;
- decode, for said image block, additional information indicating whether said image block is predicted according to said current intra directional prediction mode or according to both said current intra directional prediction mode and an additional intra directional prediction mode whose direction is adjacent to a direction of said current intra directional prediction mode; and
- decode said image block responsive to said information representative of said current intra directional prediction mode and to said additional information.

14. A non-transitory computer readable medium with instructions stored therein which, upon execution, instruct at least one processor to:
- encode, for an image block, information representative of at least one intra directional prediction mode;
- encode additional information indicating whether said image block is predicted according to said intra directional prediction mode or according to said intra directional prediction mode and further according to an adjacent intra directional prediction mode; and
- encode said image block responsive to said information representative of an intra directional prediction mode and to said additional information.

15. A stream comprises at least information representative of an intra directional prediction mode, additional information indicating whether an image block is predicted according to the intra directional prediction mode or according to both the intra directional prediction mode and an additional intra directional prediction mode whose direction is adjacent to a direction of the current intra directional prediction mode and data representative of said image block coded responsive to said information representative of an intra directional prediction mode and to said additional information.
